Europäisches Patentamt

European Patent Office

Office européen des brevets

(19)

(11) Publication number: **0 186 467**
**A2**

## (12) EUROPEAN PATENT APPLICATION

(21) Application number: 85309330.0

(22) Date of filing: 20.12.85

(51) Int. Cl.⁴: **G 11 B 7/24**

(30) Priority: 28.12.84 JP 278462/84

(43) Date of publication of application:
02.07.86 Bulletin 86/27

(84) Designated Contracting States:
DE FR GB NL

(71) Applicant: **Pioneer Electronic Corporation**
**4-1 Meguro 1-chome**
**Meguro-ku Tokyo 153(JP)**

(72) Inventor: **Komaki, Toshihiro c/o Pioneer Electronic Corp.**
**Tokorozawa Works No. 2610, Hanazono 4-chome**
**Tokorozawa-shi Saitma(JP)**

(72) Inventor: **Namiki, Tohru c/o Pioneer Electronic Corp.**
**Tokorozawa Works No. 2610, Hanazono 4-chome**
**Tokorozawa-shi Sajtma(JP)**

(72) Inventor: **Yokozeki, Shinichi c/o Pioneer Electronic Corp.**
**Tokorozawa Works No. 2610, Hanazono 4-chome**
**Tokorozawa-shi Saitma(JP)**

(72) Inventor: **Iida, Tetsuya c/o Pioneer Electronic Corp.**
**Tokorozawa Works No. 2610, Hanazono 4-chome**
**Tokorozawa-shi Saitma(JP)**

(74) Representative: **Jackson, Peter Arthur et al,**
**GILL JENNINGS & EVERY 53-64 Chancery Lane**
**London WC2A 1HN(GB)**

(54) Optical data recording medium and method.

(57) An optical data recording medium includes a substrate (1) and a recording layer (2) thereon formed of crystalline material and including crystals that grow to record data in the layer in response to having a laser beam focused thereon. A protective film (3) may be provided over the recording layer. The recording layer may comprise tellurium and 10 to 80 atomic percent of carbon, and may also include up to 50 atomic percent of hydrogen.

*FIG. 2*

EP 0 186 467 A2

0186467

PIONEER ELECTRONIC CORPORATION          Ref: 50/2822/02

## OPTICAL DATA RECORDING MEDIUM AND METHOD

This invention relates to an optical data recording medium to which an energy beam such as a laser beam is applied to record or reproduce data, and a method for recording thereon.

Recently, devices for recording data on an optical data recording medium, such as an optical disk, and reproducing data recorded on the recording medium have been commercialised. Of these devices, a type using direct read after write (DRAW), in which data can be reproduced immediately after the recording operation, has attracted special attention in the art. Thereafter, a variety of materials for the disk and a variety of recording and reproducing methods have been proposed.

JP-A-33320/1984 has proposed a method in which a recording layer for recording data is made of tellurium (Te) including carbon (C), and an energy beam is applied to the recording layer to melt or evaporate the layer locally to form holes therein, or at least to deform it, and thereby record data thereon.

The method is acceptable in the case where the holes are substantially equal in size. In the case where the hole size changes at random, however, the holes that are formed are liable to be non-uniform in shape and size.

In order to overcome this problem, a method has been proposed, which is not disclosed by the aforementioned Japanese Patent Application, and in which a space is formed above the recording layer so that the tellurium can be freely molten or evaporated. As a result, relatively stable holes can be formed. When such a so-called "air sandwich structure" is employed, however, the thickness of the disk is increased and certain structural limitations, such as sealing characteristics, become severe. In addition, warping or deforming of the disk is liable to occur, which makes it necessary to take strict quality control measures.

The object of the present invention is to provide an optical recording medium which is capable of high quality recording of data, and which is easy to manufacture; and a method for optically recording information in a reproducible manner on a recording medium.

According to the invention, an optical data recording medium comprises a substrate and a recording layer on the substrate; characterised in that the recording layer is formed of crystalline material including crystal grains, which are able to grow to record data in the layer in response to having an energy beam focused thereon.

The invention also includes a method of optically recording data including the steps of providing such a recording medium and selectively focusing a laser beam on the medium to record data.

The invention will now be described by way of example with reference to the accompanying drawings, in which:

Figure 1 is a section through one example of optical data recording medium according to the present invention;

Figure 2 is a section through another example of optical data recording medium according to the present invention;

Figure 3 is an X-ray diffraction diagram;

Figure 4 is a diagram depicting the relationship between reflection factor and crystal grain size;

Fig. 5 is a picture indicating the reflection factors of various parts of a reproduced signal; and

Fig. 6 is a picture of a recording pattern on the optical recording medium of the present invention.

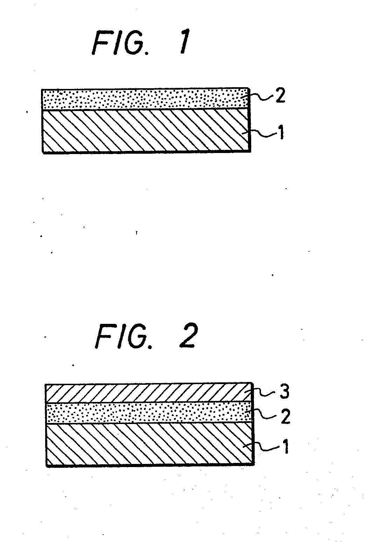

Fig. 1 is a sectional view of a disk which is one embodiment of the data recording medium according to the present invention. In Fig. 1, a guide groove (not shown) is formed in a substrate 1 of acrylic resin by injection molding. The substrate 1 may be made of plastics or glass with a guide groove that is made from an ultraviolet-setting resin. The thickness of the substrate may be freely chosen and, for instance, may be 1 to 2 mm.

Further in Fig. 1, a recording layer 2, on which data are recorded, is formed on the substrate 1. The thickness of the recording layer 2 is within the range of from 100 $\overset{\circ}{A}$ to 1 $\mu$m. In order to prevent the formation of defects such as holes, the thickness may be set to 1000 $\overset{c}{A}$ or more.

Examples of material suitable for the recording layer 2 are tellurium (Te) including carbon (C) of 10 atomic percent to 80 atomic percent, or chemical compounds of tellurium and carbon and tellurium including carbon of 10 atomic percent to 80 atomic percent and hydrogen (H) of 50 atomic percent or less or chemical compounds of carbon and hydrogen, or chemical compounds of tellurium, carbon and hydrogen.

The recording layer 2 can be formed by sputtering tellurium in an organic gas containing carbon and hydrogen such as a gaseous mixture of methane ($CH_4$) and argon (Ar). The contents of carbon and hydrogen in the organic gas can be controlled by adjusting the mixing ratio of methane and argon, gas partial pressure, gas flow-rate, sputtering output power, and sputtering method.

A recording layer 2 having a thickness of 1000 $\overset{o}{A}$ or more was formed with the ratio of $CH_4/Ar$ set to 0.1 to 1.25, the gas partial pressure set to 0.1 Pa to 1 kPa, the gas flow-rate set to 10 to 100 cc/min, and the sputtering output power set to 50W to 1 KW. The contents and structures of the recording layers thus formed were analyzed according by Auger electronic spectral analysis (AES) and an X-ray photo-electronic spectral analysis. As a result, it was confirmed that carbon was present as graphite, hydrocarbon, and tellurium carbide.

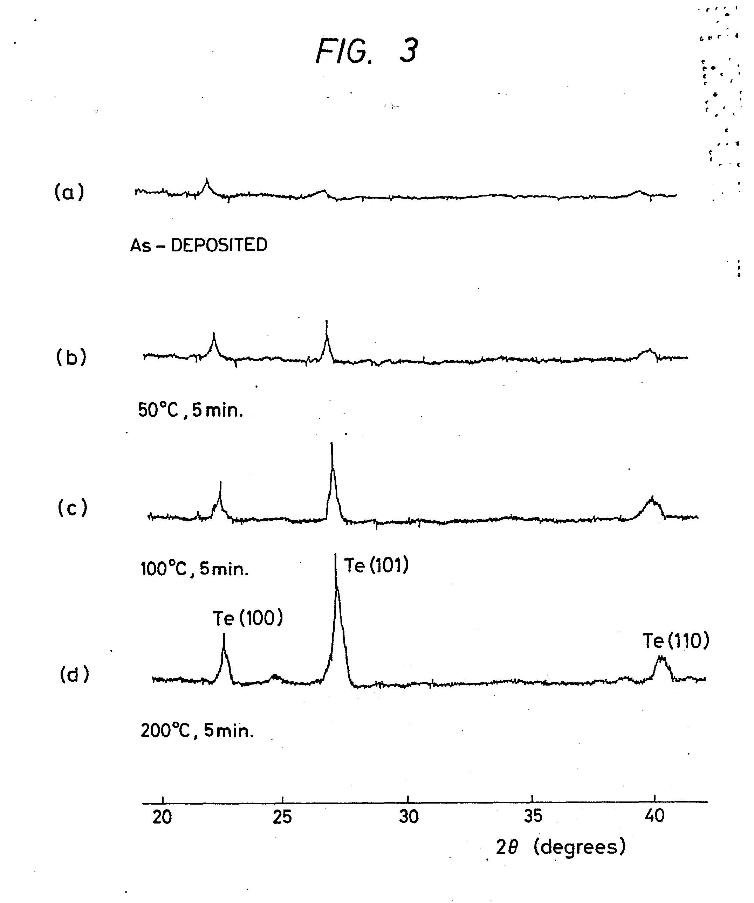

Fig. 3(a) is an X-ray diffraction diagram of the recording layer 2 thus formed. As is apparent from the diagram, the recording layer 2 is crystalline. Parts (b), (c), and (d) of

- 5 -

0186467

Fig. 3 are X-ray diffraction diagrams of the recording layer which are heated for five minutes in an electric furnace at $50\,^{\circ}C$, $100\,^{\circ}C$, and $200\,^{\circ}C$, respectively. That is, the crystallization increased with increasing temperature.

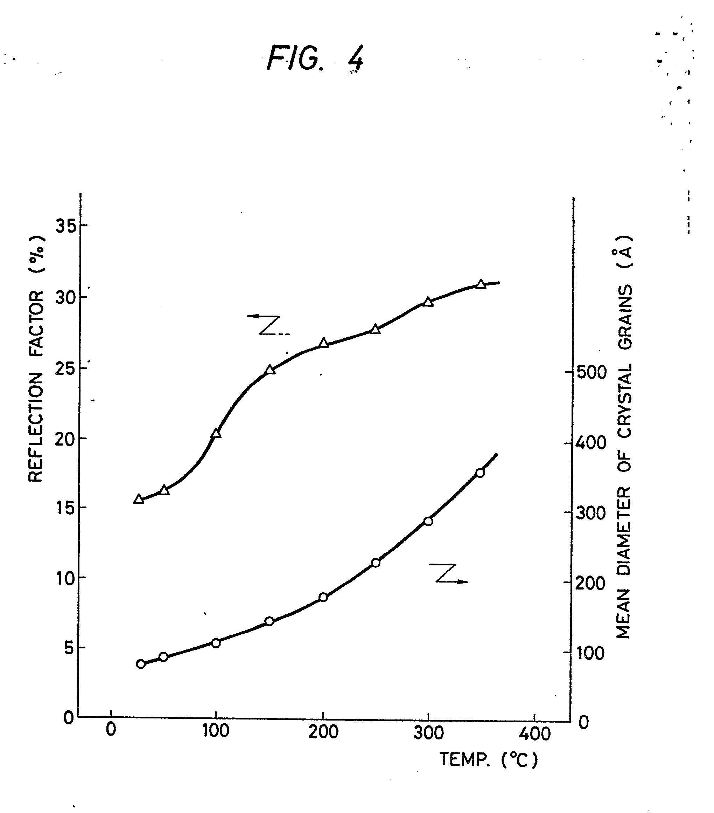

Fig. 4 is obtained by plotting variations in reflection factor of the recording layer 2 with temperature, and variations in crystal grain size with temperature which are obtained by analyzing the X-ray diffraction diagram. As is clear from Fig. 4, the crystal grain size and the reflection factor increase with rising temperature. In order to obtain a suitable reflection factor variation and recording density, it is considered practical that the crystal grain size be in a range of from 10 $\overset{\circ}{A}$ to 1 μm.

As is apparent from the above description, when an energy beam is applied to the recording layer 2 to heat the layer 2 locally, then the heated part of the recording layer 2 is increased in crystal grain size, and is, therefore, increased in reflection factor, whereby data can be recorded and reproduced.

As was described above, data are recorded and reproduced by the utilization of reflection factor variation. Therefore, in the recording medium of the present invention, unlike those deformed by forming holes or the like, it is unnecessary to employ the air sandwich structure. Accordingly, it is preferable to form a protective film layer 3 on the recording layer 2 as shown in Fig. 2 so that even when a strong energy beam is applied to the recording medium, deformed parts such as holes in the recording medium will not be formed.

The protective film layer 3 can be made of organic or non-organic material. It is suitable to use a transparent material such as ultraviolet-setting resin, thermo-plastic resin, thermo-setting resin, silicon dioxide ($SiO_2$) or magnesium fluoride ($MgF_2$). As a concrete example thereof, a protective film layer was formed by coating ultraviolet-setting resin to a thickness of at least 1 $\mu$m, which was 6H or higher in pencil hardness when hardened.

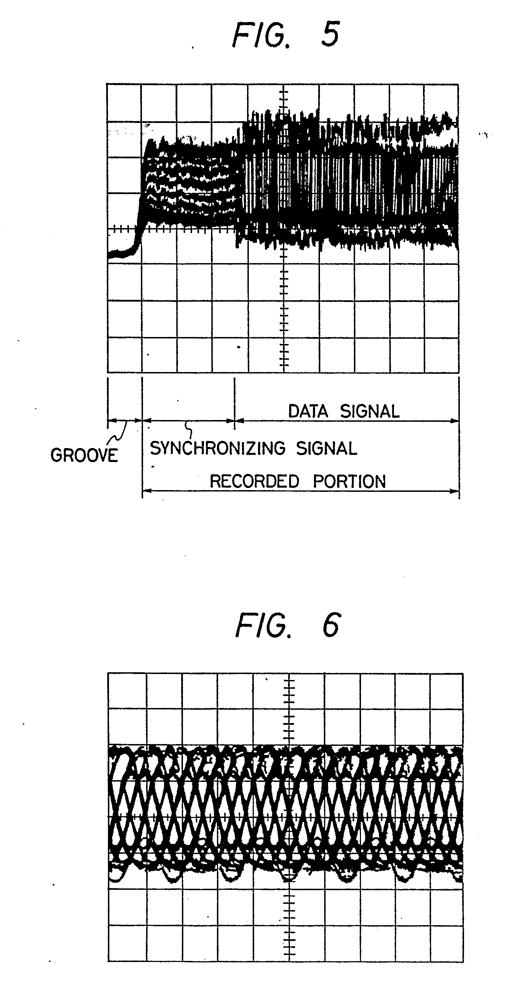

When a laser beam with a wavelength of 830 nm and peak power of 4.5mW was applied to the recording layer 2 covered with the protective layer 3 through a lens with a numerical aperture of 0.5 and run (rotated) at a linear speed of about 2.6 m/s, signals could be recorded thereon. The reproduced signals thereof are as shown in Fig. 5. The reflection factor of the part (or signal-less part) where only the groove is formed is about 12%, while the reflection factor of the part where the synchronizing signal and the data signal are recorded is higher, about 20%. Fig. 6 is a picture of the eye pattern thereof, showing a relatively excellent aperture degree.

As was described above, the optical data recording medium of the present invention is made up of the substrate 1, the recording layer 2 of crystalline material formed on the substrate 1, and, in some cases, the protective film layer 3 formed on the recording layer 2. When a energy beam such as a laser beam is applied through the substrate 1 or the protective film layer 3 to the recording layer 2, the crystal grains in the recording layer 2 grow, so that data can be recorded thereon without forming deformed parts such as holes or the like. The data recorded on the optical data recording medium can be reproduced by the utilization of the reflection factor variations that are caused when the energy beam is applied to the recording medium. For instance, at 1 MHz, a C/N ratio of about 50 dB (bandwidth 30 KHz), and an error rate of $1 \times 10^{-5}$ or less can be obtained.

CLAIMS

1.  An optical data recording medium comprising a substrate (1) and a recording layer (2) on the substrate; characterised in that the recording layer (2) is formed of crystalline material including crystal grains, which are able to grow to record data in the layer in response to having an energy beam focused thereon.

2.  An optical data recording medium according to claim 1, wherein the crystal grains are 10A to 1μm in diameter.

3.  An optical data recording medium according to claim 1 or claim 2, wherein the recording layer (2) comprises tellurium and includes between 10 and 80 atomic percent of carbon.

4.  An optical data recording medium according to claim 3, wherein the recording layer (2) includes up to 50 atomic percent of hydrogen.

5.  An optical data recording medium according to any one of the preceding claims, wherein the recording layer (2) is between 100A and 1μm in thickness.

6.  An optical data recording medium according to any one of the preceding claims, wherein a groove is formed in the substrate (1).

7.  An optical data recording medium according to any one of the preceding claims, wherein a protective film (3) formed on the recording layer.

0186467

8. An optical data recording medium according to claim 7, wherein the protective film (3) comprises an ultraviolet-setting resin.

9. A method for optically recording data comprising the steps of providing a substrate (1) providing a recording layer (2) of crystalline material on the substrate, the crystalline material including crystal grains which are able to grow to record data in the layer in response to having an energy beam focused thereon; and selectively focusing a laser beam on the recording layer (2) to cause selected crystals therein to grow to represent recorded data.

FIG. 1

- ~2
- ~1

FIG. 2

- ~3
- ~2
- ~1

# FIG. 3

(a)

As – DEPOSITED

(b)

50°C , 5 min.

(c)

100°C , 5 min.

Te (101)

Te (100)

Te (110)

(d)

200°C , 5 min.

20    25    30    35    40

2θ (degrees)

# FIG. 4

# FIG. 5

| | | | DATA SIGNAL |
| --- | --- | --- | --- |
| GROOVE | | SYNCHRONIZING SIGNAL | |
| | | RECORDED PORTION | |

# FIG. 6